# EUROPÄISCHE PATENTANMELDUNG

(11) **EP 0 609 475 A1**
(43) Veröffentlichungstag der Anmeldung: **10.08.1994**
(21) Anmeldenummer: 93101743.8
(22) Anmeldetag: 04.02.1993
(51) Int. Cl.: B62B 5/04

(54) **Handbetätigbare Bremse für Rehabilitationsgeräte**

(71) Anmelder: Schulz, Claus-Dieter, D-24145 Kiel (DE); Eickemeyer, Bernd, D-24145 Kiel (DE); Jedtberg, Wolfgang, D-24145 Kiel (DE)
(72) Erfinder: Schulz, Claus-Dieter, D-24145 Kiel (DE); Eickemeyer, Bernd, D-24145 Kiel (DE); Jedtberg, Wolfgang, D-24145 Kiel (DE)
(74) Vertreter: Seibert, Hannelore

(57) **Zusammenfassung**

Bei einer handbetätigbaren Bremse für Rehabilitationsgeräte, insbesondere Rollstühle, mit einem auf die Reifen einwirkenden und über einen Hebel betätigbaren Bremsklotz ist zur sicheren Bremsung auch bei unterschiedlich aufgeblasenen Reifen und zum leichtem Lösen dieser Bremse erfindungsgemäß vorgesehen, daß der Bremsklotz (10) am freien Ende eines horizontal gelagerten und in Richtung auf den Reifen (9) verschiebbaren Schiebers (6) befestigt ist, wobei der Schieber (6) mittels eines auf sein anderes Ende einwirkenden und oberhalb des Schiebers (6) schwenkbar gelagerten Kniehebels (12) mit einem Betätigungshandgriff (14) am oberen Ende gegen den Reifen gepreßt werden kann, wobei der Schieber (6) durch zusätzliche Fixiermittel (17, 18) stufenlos arretierbar ist.

## Beschreibung

Die Erfindung bezieht sich auf eine handbetätigbare Bremse für Rehabilitationsgeräte, insbesondere Rollstühle, mit einem auf die Reifen einwirkenden und über einen Hebel betätigbaren Bremsklotz.

Insbesondere bei Rollstühlen ist es wesentlich, daß diese eine sichere Bremse aufweisen, die bei Bergab-Fahrten und/oder bei Reifen mit vermindertem Luftdruck dennoch eine sichere Bremsung gewährleisten. Außerdem sollen diese Bremsen aber auch leicht lösbar und auch von schwerbehinderten Personen leicht bedienbar sein. Diese Bedingungen werden jedoch in den wenigsten Fällen von den auf dem Markt befindlichen Geräten erfüllt.

Der vorliegenden Erfindung liegt daher die Aufgabe zugrunde, eine handbetätigte Bremse zu schaffen, die luftdruckunabhängig eine sichere und einfach zu handhabende Bremsung ermöglicht und dabei stufenlos arretierbar ist und gleichzeitig leicht wieder gelöst werden kann.

Zur Lösung dieser Aufgabe ist erfindungsgemäß vorgesehen, daß der Bremsklotz am freien Ende eines individuell gelagerten und in Richtung auf den Reifen verschiebbaren Schiebers befestigt ist, daß der Schieber mittels eines auf sein anderes Ende einwirkenden und oberhalb des Schiebers schwenkbar gelagerten Kniehebels mit einem Betätigungshandgriff am oberen Ende gegen den Reifen preßbar ist und daß der Schieber durch zusätzliche Fixiermittel stufenlos arretierbar ist.

Bezüglich des Schiebers sollte dieser als hochkantstehendes Rechteckprofil ausgebildet und auf seinen beiden Längsseiten mit einer vertikal verlaufenden, rillenförmigen Profilierung versehen sein.

Zur sicheren Führung ist es zweckmäßig, wenn der Schieber etwa mittig und im Bereich des Bremsklotzendes in zwei, den Schieber umschließenden Halterungen mit ober- und unterseitigen Kugelpfannen als Verkantsicherung geführt ist.

Desweiteren ist es zweckmäßig, wenn die Fixiermittel aus beiderseits des Schiebers schwenkbar angeordneten und mittels Rückholfedern in Richtung auf den Schieber drückenden, keilförmigen Klemmbacken bestehen, an die rückseitig ein Seilzug zum Lösen der Klemmbacken befestigt ist, der zum vertikal verschiebbaren Betätigungshandgriff des Kniehebels geführt und an diesem befestigt ist.

Dieser Seilzug sollte zweckmäßigerweise von den Klemmbacken zum unteren Ende des Kniehebels und von dort entlang seiner Außenseite in Richtung zum Betätigungshandgriff geführt und über eine Umlenkrolle im Kniehebel an der Unterkante des Betätigungshandgriffes festgelegt sein, der das obere Ende des Kniehebels rohrförmig überdeckt und gegen den Kniehebel über eine Druckfeder abgestützt ist.

Dabei kann von jeder Klemmbacke ein Seilzugstrang ausgehen, der über eine Umlenkrolle und Seilspanner zum unteren Ende des Kniehebels geführt und dort kraftschlüssig zu einem einzigen Seilzug verbunden sind.

Es ist aber auch möglich, daß der Schieber mechanisch, pneumatisch und/oder hydraulisch fixierbar ist.

Weiterhin ist es von Vorteil, wenn zwischen der hinteren Halterung und dem Bremsklotz Rückholfedern angeordnet sind, um bei Lösen der Bremse den Schieber mit dem Bremsklotz in seine Ausgangslage zurückzuholen.

Zur leichteren Betätigung ist es ferner zweckmäßig, wenn zwischen unterem Bereich des Kniehebels und dem anliegenden Ende des Schiebers eine Zylinderrolle eingepreßt ist.

Anhand einer schematischen Zeichnung sind Aufbau und Funktionsweise eines Ausführungsbeispiels nach der Erfindung näher erläutert. Dabei zeigen:
- Fig. 1: eine perspektivische Ansicht des Bremsmechanismus mit teilweise aufgeschnittenen Teilen und
- Fig. 2: die Außenansicht der Bremse im gekapselten Zustand.

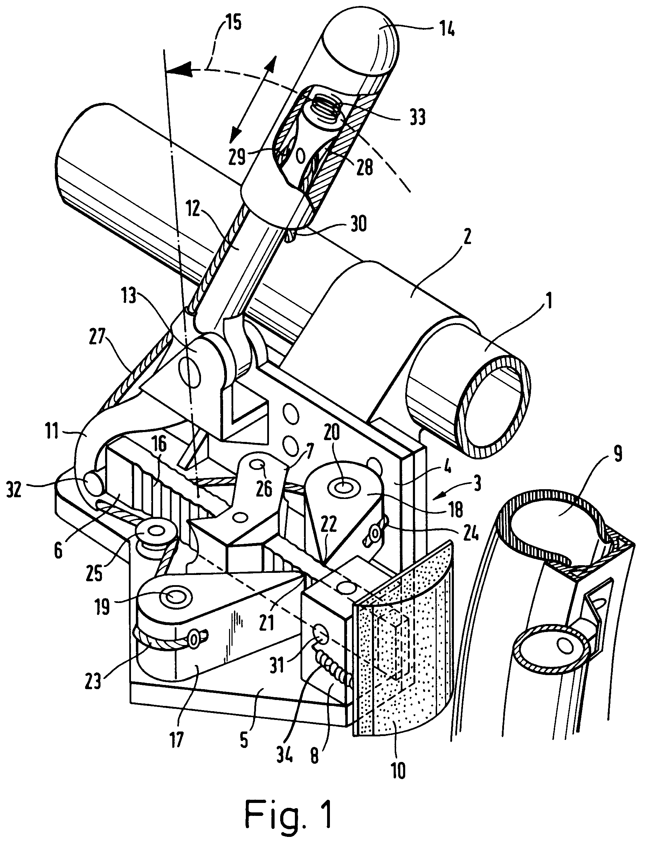

Wie man aus Fig. 1 ersieht, ist zunächst an einem Rohrgestänge 1, beispielsweise eines Rollstuhls, über eine Muffe 2 ein Winkelstück 3 mit einer vertikalen Platte 4 und einer horizontalen Platte 5 befestigt, auf der der eigentliche Bremsmechanismus angeordnet ist.

Dazu ist auf der horizontalen Platte 5 zunächst ein Schieber 6 in zwei auf der Platte 5 festgelegten Halterungen 7 und 8 geführt, an dessem Ende - dem abzubremsenden Reifen 9 gegenüberstehend - ein Bremsklotz 10 befestigt ist. Das andere Ende des Schiebers 6 ist vom gebogenen Unterteil 11 eines Kniehebels 12 umfaßt, wobei dieser Kniehebel 12 oberhalb des Schiebers 6 in einem an der vertikalen Platte 4 befestigten Gelenk 13 schwenkbar befestigt ist.

Beim Verschwenken des oberen, von einem rohrförmigen Betätigungshandgriff 14 umschlossenen Kniehebels 12 nach vorn in Richtung des Pfeiles 15 wird der untere gebogene Teil 11 des Kniehebels 12 nach hinten gedrückt und schiebt damit den Schieber 6 in Richtung auf den Reifen 9, bis der Bremsklotz 10 mit dem Reifen 9 in Kontakt kommt und damit das Rad abbremst. Durch die vorgegebene Länge des Verschiebungsweges des Schiebers ist damit eine sichere Bremsung auch bei geringem Luftdruck oder sogar einem platten Reifen möglich.

Zur stufenlosen Arretierung und Lösen der Bremse ist darüberhinaus noch folgendes vorgesehen.

Nach dem dargestellten Ausführungsbeispiel ist der Schieber 6 als hochkantstehendes Rechteckprofil ausgebildet und ist auf seinen beiden Längsseiten mit einer vertikal verlaufenden, rillenförmigen Profilierung 16 versehen. Beiderseits des Schiebers 6 sind - zweckmäßigerweise zwischen den beiden Halterungen 7 und 8 - zwei keilförmige Klemmbacken 17 und 18 angeordnet, die um in der horizontalen Platte 5 festgelegte Achsen 19 und 20 schwenkbar sind und durch innenliegende, nicht näher dargestellte Rückholfedern stets in Richtung des Schiebers 6 drücken. Dabei sind die keilförmigen Rastspitzen 21 und 22 mit den Klemmbacken 17 und 18 beim Anliegen an den Schieber 6 stets geringfügig in Richtung auf den Reifen 9 angestellt.

Auf den den Rastspitzen 21 und 22 gegenüberliegenden Enden der Klemmbacken 17 und 18 sind zwei Seilzüge 23 und 24 befestigt, die über Umlenkrollen 25 und 26 und nicht näher dargestellte Seilspanner zum unteren Ende 11 des Kniehebels 12 geführt und dort zu einem einzigen Seilzug 27 kraftschlüssig verbunden sind.

Dieser einzige Seilzug 27 ist dann nach oben zum Kopf des Kniehebels 12 geführt und dort über eine in einer Aussparung 28 des Kniehebels 12 gehalterten Umlenkrolle 29 wieder nach unten geführt und am unteren Rand 30 des Betätigungshandgriffs 14 an diesem festgelegt.

Die somit in ihren Einzelteilen und ihrem mechanischen Aufbau beschriebene Bremse funktioniert nun wie folgt:
Bei einem Verschwenken des Handgriffs 14 und damit des Kniehebels 12 nach vorn in Richtung des Pfeiles 15 wird durch Zurückfahren des Kniehebelunterteils 11 der Schieber 6 mit seinem Bremsklotz 10 gegen den Reifen 9 gepreßt und übt damit eine Bremswirkung aus. Durch die relative Länge des Schiebers 6 ist damit auch ein weiter horizontaler Verstellweg für den Bremsklotz 10 gegeben, so daß damit auch bei beispielsweise drucklosen Reifen 9 noch eine sichere Bremsung gewährleistet ist.

Durch das Nachvornschwenken des Kniehebels 12 lockern sich auch die beiden Seilzüge 23 und 24 etwas, so daß die stets mit ihren Spitzen 21 und 22 in Richtung zum Bremsklotz 10 geneigten Klemmbacken 17 und 18 durch Wirkung ihrer innenliegenden Rückholfedern zum Schieber 6 geschwenkt werden und dort in eine der Profilierungen 16 eingreifen und damit ein Zurückrutschen des Schiebers 6 sicher verhindern.

Zum Lösen der Bremse werden dann durch Zurückziehen des Hebels 14 entgegen der Pfeilrichtung 15 die beiden Seilzüge 23 und 24 gespannt und verdrehen und lösen damit die beiden Klemmbacken 17 und 18 nach außen. Durch schematisch angedeutete Rückholfedern 34 zwischen der Öffnung 31 der hinteren Halterung 8 und dem Bremsklotz 10 wird dann auch dieser Bremsklotz 10 zusammen mit dem Schieber 6 so weit zurückgeholt wie der zurückgeschwenkte Kniehebel 12 den Weg für den Schieber 6 freigibt.

Ein Lösen der Klemmbacken 17 und 18 ist aber auch möglich, indem der Betätigungshandgriff 14 nach unten gedrückt wird, da hierbei dann über die Umlenkrolle 29 der Verbindungsseilzug 27 und damit die beiden Teilseilzüge 23 und 24 gespannt werden und die Klemmbacken 17 und 18 nach außen drehen.

Damit ist also beim Befahren eines Gefälles mit einem Rollstuhl ein dosiertes Bremsen dadurch möglich, daß der Rollstuhlfahrer den Betätigungshandgriff 14 nach unten und gleichzeitig den Kniehebel 12 nach vorne drückt. Damit sind die Klemmbacken 17 und 18 geöffnet und der Schieber 6 kann unabhängig vom Luftdruck des Reifens auf das Rad wirken. Ein weiterer Vorteil besteht darin, daß diese Bremse auch von Rollstuhlfahrern mit erheblichen Behinderungsgraden leicht dadurch aus der Arretierung gelöst werden kann, daß der Betätigungshandgriff 14 lediglich mit der Innenhandfläche nach unten gedrückt werden muß, wodurch die Klemmbacken freischwenken und die Arretierung der Bremse aufheben.

Bei dem dargestellten Ausführungsbeispiel ist zwischen dem hebelseitigen Ende des Schiebers 6 und dem gewölbten Hebelteil 11 noch eine Zylinderrolle 32 eingepreßt, um einem vorzeitigen Verschleiß der Berührungsflächen vorzubeugen.

Darüberhinaus weisen die Halterungen 7 und 8 ober- und unterseitig eingeschraubte Kugelpfannen auf, damit sich der Schieber 6 nicht in den Halterungen 7 und 8 verkanten kann.

Bei dem dargestellten Ausführungsbeispiel besteht die Arretierung des Schiebers 6 aus zwei schwenkbaren Klemmbacken 17 und 18. Es ist aber auch möglich, anstelle einer solchen mechanischen Verriegelung eine andersartig mechanische, pneumatische und/oder hydraulische Fixierung zu wählen, die die gleichen Aufgaben einer sicheren Arretierung und einer leichten Lösbarkeit erfüllen.

Insgesamt ergibt sich also eine handbetätigte Bremse, die auch bei größeren Bremsklotz-Verstellwegen sicher funktioniert und einfach zu betätigen ist. Diese Bremse ist vorstehend am Beispiel eines Rollstuhls erläutert. Sie ist jedoch in gleicher Weise auch für andere Rehabilitationsgeräte sicher geeignet.

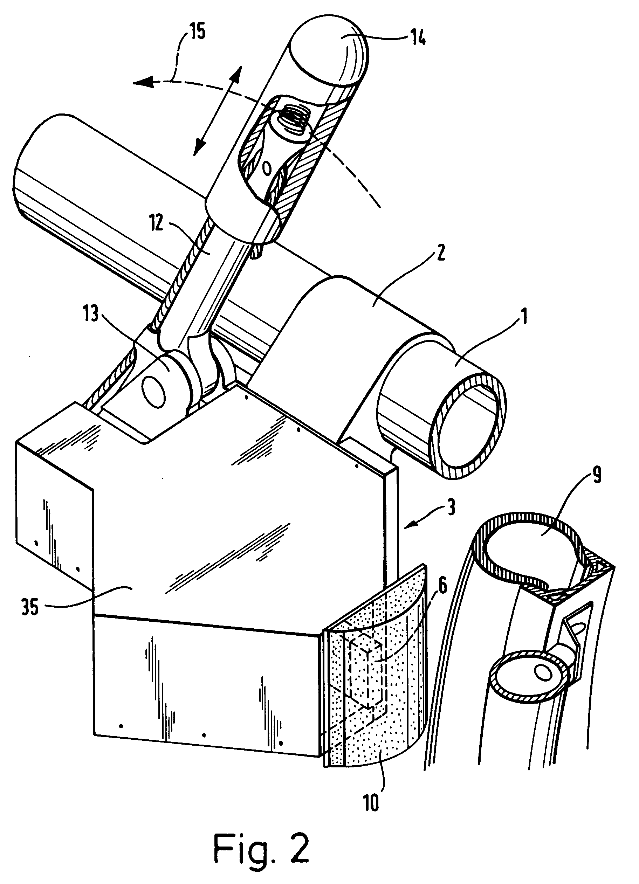

Wie man ergänzend noch aus Fig. 2 ersieht, kann die gesamte Bremsmechanik, die auf der unteren horizontalen Platte 5 befestigt ist, von einem allseitig geschlossenen Gehäuse 35 abgedeckt sein, das an den umlaufenden Schmalkanten der Platten 4 und 5 festgelegt ist. Dabei ist auf der Vorderseite lediglich ein Durchtritt für das den Bremsklotz 10 tragende Ende des Schiebers 6 sowie auf der Rückseite das Gelenk 13 freigelassen.

## Patentansprüche

1. Handbetätigbare Bremse für Rehabilitationsgeräte, insbesondere Rollstühle, mit einem auf die Reifen einwirkenden und über einen Hebel betätigbaren Bremsklotz, dadurch gekennzeichnet, daß der Bremsklotz (10) am freien Ende eines horizontal gelagerten und in Richtung auf den Reifen (9) verschiebbaren Schiebers (6) befestigt ist, daß der Schieber (6) mittels eines auf sein anderes Ende einwirkenden und oberhalb des Schiebers (6) schwenkbar gelagerten Kniehebels (12) mit einem Betätigungshandgriff (14) am oberen Ende gegen den Reifen (9) preßbar ist und daß der Schieber (6) durch zusätzliche Fixiermittel stufenlos arretierbar ist.

2. Bremse nach Anspruch 1, dadurch gekennzeichnet, daß der Schieber (6) als hochkantstehendes Rechteckprofil ausgebildet und auf seinen beiden Längsseiten mit einer vertikal verlaufenden, rillenförmigen Profilierung (16) versehen ist.

3. Bremse nach Anspruch 1 und 2, dadurch gekennzeichnet, daß der Schieber (6) etwa mittig und im Bereich des Bremsklotzendes in zwei, den Schieber (6) umschließenden Halterungen (7, 8) mit ober- und unterseitigen Kugelpfannen als Verkantsicherung geführt ist.

4. Bremse nach einem der Ansprüche 1 bis 3, dadurch gekennzeichnet, daß die Fixiermittel aus beiderseits des Schiebers (6) schwenkbar angeordneten und mittels Rückholfedern in Richtung auf den Schieber (6) drückenden, keilförmigen Klemmbacken (17, 18) bestehen, an die rückseitig ein Seilzug (23, 24) zum vertikal verschiebbaren Betätigungshandgriff (14) des Kniehebels (12) geführt und an diesem befestigt ist.

5. Bremse nach Anspruch 4, dadurch gekennzeichnet, daß der Seilzug (23, 24) von den Klemmbacken (17, 18) zum unteren Ende (11) des Kniehebels (12) und von dort entlang seiner Außenseite in Richtung zum Betätigungshandgriff (14) geführt und über eine Umlenkrolle (29) im Kniehebel (12) an der Unterkante (30) des das obere Ende des Kniehebels (12) rohrförmig überdeckenden und gegen den Kniehebel (12) über eine Druckfeder (33) abgestützten Betätigungshandgriff (14) festgelegt ist.

6. Bremse nach Anspruch 5, dadurch gekennzeichnet, daß von jeder Klemmbacke (17, 18) ein Seilzugstrang (23, 24) ausgeht, der über eine Umlenkrolle (25, 26) und einen Seilspanner zum unteren Ende (11) des Kniehebels (12) geführt und dort kraftschlüssig zu einem einzigen Seilzug (27) verbunden sind.

7. Bremse nach Anspruch 1 und 2, dadurch gekennzeichnet, daß zwischen dem unteren Bereich (11) des Kniehebels (12) und dem anliegenden Ende des Schiebers (6) eine Zylinderrolle (32) eingepreßt ist.

8. Bremse nach Anspruch 3, dadurch gekennzeichnet, daß zwischen der hinteren Halterung (8) und dem Bremsklotz (10) Rückholfedern angeordnet sind.

9. Bremse nach Anspruch 1 und 3, dadurch gekennzeichnet, daß der Schieber (6) mechanisch, pneumatisch und/oder hydraulisch fixierbar ist.

10. Bremse nach einem oder mehreren der Ansprüche 1 bis 9, dadurch gekennzeichnet, daß die Bremsvorrichtung von einem allseitig geschlossenen Gehäuse (35) abgedeckt ist.
